# EUROPEAN PATENT SPECIFICATION

(11) **EP 2 346 667 B1**
(45) Date of publication and mention of the grant of the patent: **08.08.2012**
(21) Application number: 09763999.1
(22) Date of filing: 16.10.2009
(51) Int. Cl.: B29C 47/20, B29C 47/08, B08B 9/00, B08B 9/055, B29K 29/00, B29K 23/00

(54) **POLYMER EXTRUSION PROCESS**
POLYMEREXTRUSIONSVERFAHREN
PROCÉDÉ D'EXTRUSION DE POLYMÈRE

(30) Priority: 16.10.2008 GB 0818995
(43) Date of publication of application: 27.07.2011
(73) Proprietor: Taylor, Paul Anthony, Weston-Super-Mare, Somerset BS24 8PA (GB)
(72) Inventor: Taylor, Paul Anthony, Weston-Super-Mare, Somerset BS24 8PA (GB)
(74) Representative: Loven, Keith James
(86) International application number: PCT/GB2009/051389
(87) International publication number: WO 2010/043909

(56) References cited:
- EP-A- 0 800 910
- WO-A-2004/046229
- US-A- 3 071 498
- US-A- 3 798 064
- US-A- 4 731 126

## Description

### Field of the Invention

This invention relates to a polymer extrusion process, in particular for extrusion of a polyvinyl alcohol (PVA) composition through an annular die and blowing the resulting extrudate to form a biodegradable cylindrical film suitable for the formation of, for example, carrier or refuse bags.

### Background to the Invention

W02004/046229 describes a method of preparing a plasticised particulate PVA composition, in which at least a portion of the plasticiser is water, and the formation of a PVA film from the composition. In compositions according to W02004/046229, the total amount of plasticiser should be between 10 and 20% by weight and the amount of water included in the mixture of the PVA and plasticiser is normally controlled to provide a moisture content in the range from 7% to 14%, having regard to the water content already present in the PVA resin.

In processing the composition to form a film, the composition is passed through a screw extruder and a die to a blowing station where the extrudate, which has the form of an annular or cylindrical film, has air blown through it to form a bubble. The film, once cooled, is then passed through nip rollers as a continuous collapsed tube for subsequent processing to form individual refuse sacks, for example. The screw extruder includes a feed screw rotatably mounted in a barrel having an inlet hopper at one end and an adaptor connected to and in communication with the die at the other end. The feed screw typically includes feed, compression and metering sections where the depth and spacing or pitch of the flights will differ according to the function of the section. W02004/046229 teaches that the extrusion die and blowing apparatus are conventional. For example, extrusion can take place in a general purpose screw extruder having controlled zonal heating to give a temperature profile along the barrel, the temperature profile typically having four zones running respectively at about 100°C, about 175°C, about 190° and about 195°C, following which there is an adaptor also running at about 195°C and which leads to the die which is operated typically at 185°C to 195°C.

It has been found in practice that the extrusion process as described in W02004/046229 results in serious problems in that, at the temperatures obtaining within the extruder, water is lost from the composition due to evaporation and boiling. As a result, the composition loses its plasticity and at least partially solidifies in the extrusion apparatus since, as the level of water as a plasticiser falls below a critical level during processing, the PVA will cross link (the net effects are yellowing of the extrudate together with a putrid burning smell). As the material cross links within the extruder, it becomes sticky initially and will adhere to the apparatus components (screw, barrel, and die parts). Once the material has stuck, it will start further to degrade and will cause hitherto good material flowing past it to adhere, thus compounding the problem. Eventually, a total blockage of the extruder will result. A total strip down of the extruder and die will be necessary for subsequent cleaning. It is important to note that, once the material has begun the stage of cross linking, the bubble will be lost. Any attempts to clear the blockage by keeping the extruder running (in a commercial sense) will be futile as, whilst the integrity of the bubble may be re-established for a short while, fragments of the cross-linked material will eventually break away and contaminate the melt whereby, upon exit from the die, the bubble will burst thus preventing production of a universally uniform film. It is also important to note that, in the design of the extruder and die, there must be no areas within that will interfere in any way with a smooth flow of the extrudate, i.e. areas which may potentially allow the extrudate to remain stationary for any length of time, since cross linking will be the result. Therefore, in the processing of PVA, standard general purpose extruder/die designs, as employed for thermoplastic materials such as polyethylene (PE), may not be used successfully.

EP-A-0800910 discloses a process according to preamble of claim 1 for the extrusion of plasticised PVA composition in which a thermoplastic resin is used as a purging agent, while US-A-3798064 discloses the use of a congealing cleaning mixture for use in removing a production mixture from plastics processing machines, or in shutting down the process and re-starting it without cleaning being needed.

It is an object of the present invention to provide for improved extrusion and blowing of PVA compositions and which will avoid the problems, as described above, which result from loss of plasticiser in the extrusion apparatus.

### Summary of the Invention

In one aspect, in a process for extrusion of a plasticised PVA composition, the extrusion apparatus is initially heated to operating temperature and a thermoplastic material is passed through the barrel of the extrusion apparatus until it substantially fills the interior of the apparatus from the inlet hopper to the die and thereafter, the PVA composition is introduced to the apparatus with substantially no discontinuity between the thermoplastic material and PVA composition, whereby water which evaporates from the PVA composition in passing through the extruder is contained within the apparatus as the extrusion process continues.

On termination of the extrusion process, a charge of thermoplastic material is again passed through the extrusion apparatus substantially with no discontinuity relative to the end supply of PVA composition, whereby water which evaporates from the PVA composition within the extruder apparatus is contained within the apparatus by the following charge of thermoplastic material.

The thermoplastic material used in the process according to the invention comprises high density polyethylene. It will be appreciated that the thermoplastic material essentially functions as a "plug" at the start and finish of the production run, to prevent water vapour originating from the plasticiser component of the PVA composition from escaping from the apparatus during the starting-up procedure and again during the closing-down procedure. The thermoplastic material also effectively flushes any residual PVA from the extruder and can then be left to cool and provide the "plug" for the next start-up procedure. Between the starting and closing procedures, the supply of PVA composition to the apparatus should preferably be substantially constant and at a rate to maintain the barrel fully charged throughout, to prevent any voids from being created by water vapour.

In another aspect, apparatus suitable for use in extrusion of a PVA composition includes a feed screw comprising a feed section which is cooled and preferably having a compression ratio between 2.0:1 and 3.5:1, for example 2.5:1. The L/D (length/diameter) ratio is preferably from 25-30:1.

Preferred feed screws for use in the present invention have between 6 and 12 flights in the feed zone, preferably 10 flights, between 9 and 12 flights in the compression zone, preferably 10 flights, and between 4 and 12 flights in the metering zone, preferably 8 flights, with temperatures increasing from 90-130°C

(for example, 100°C) in the feed zone with discrete heated sections in the compression and metering zones at temperatures between 160 and 205°C, for example 180°C: 170-180°C, for example 175°C; 170-190°C, for example 180°C; and 180-190°C, for example 183°C, followed by a temperature of around 160-205°C, for example 195°C, at the adaptor between the end of the metering zone and the die.

For a 65mm single screw extruder fee screw, an UD ratio of 28:1 is preferred.

In apparatus according to the present invention, the die preferably comprises a spider configuration with radially-extending arms bridging an annular space through which molten PVA composition is passed from the adaptor and through the centre of which the blowing air is passed. Preferably, all die parts which, in use, are in contact with the PVA composition are machined to ensure smooth flow pathways so as to minimise turbulence occurring in the extrudate especially between the adaptor and the annular die orifice. More preferably, the surfaces have applied thereto a non-stick coating, preferably of Armoloy (RTM) with a coating thickness of between 2.5-5mm. Preferably, the bubble is cooled as rapidly as possible by the passage of cooling air on exit from the die in order to prevent water within the film from vaporising and forming bubbles within the material of the film itself. Preferably, a constant pressure of material is exerted at the feed zone to ensure that the flow of material through the extruder and die is as uniform as possible, to maintain an even distribution of water vapour within the material passing through the extruder.

The invention will now be described by way of example.

### Example

A PVA composition was made up according to the following formulation:
PVA 117. (Kuraray) 60kg
glycerine bp 5.5kg
water 3.5kg
Aerosil (Degussa) 100g

In the above formulation, the Aerosil (RTM) is fumed silica, present as an anti-caking agent. Initially, the glycerine and water are pre-mixed. The remaining dry ingredients are then added to a mixing chamber with the mixer running on slow speed. The speed is then increased and the water and glycerine mixture is slowly added over a period of 15 minutes or so, the current load on the mixing motor being observed as a reflection of the plasticisation process; the current initially rises as plasticisation takes place and then falls once the composition has been plasticised, at which point the temperature is below 120°C, for example 90°C. The plasticised mixture is then added to a cooler until the temperature has fallen to 40°C or less, following which the compound is sieved to ensure uniform grain size. The composition may then be subject to extrusion and blowing under the conditions as previously described to produce a collapsed cylinder of biodegradable plastics material suitable for, for example, refuse or compost bags.

The ideal time for processing of the plasticised PVA (from entry at the feed zone of the extruder to exit from the die) is no longer than seven minutes, preferably five minutes or less.

## Claims

1. A process for extrusion of a plasticised PVA composition, comprising heating to an operating temperature an extrusion apparatus having an inlet hopper supplying a feed zone at one end of the apparatus, an extrusion die at the other end, and a barrel therebetween, passing a thermoplastic material through the barrel of the extrusion apparatus until the material substantially fills the interior of the apparatus from the inlet hopper to the die, and then introducing the PVA composition into the apparatus with substantially no discontinuity between the thermoplastic material and PVA composition **characterised by**, on termination of the extrusion process, passing a charge of high density polyethylene through the apparatus with substantially no discontinuity relative to the end of the supply of the PVA composition, and allowing the apparatus to cool with high density polyethylene therein.

2. A process according to Claim 1, wherein the apparatus has a cooled feed section.

3. A process according to Claim 2, wherein the apparatus has a compression ratio between 2.0:1 and 3.5:1.

4. A process according to Claim 3, wherein the apparatus has a compression ratio of 2.5:1.

5. A process according to any preceding claim, wherein the apparatus has a length to diameter ratio of from 25:1 to 30:1.

6. A process according to any preceding claim, comprising controlling the temperatures in the apparatus to increase from a temperature in the feed zone of 90°C to 130°C progressively to a temperature at the die end of the apparatus of 160°C to 205°C.

7. A process according to any preceding claim, comprising using a die which comprises an annular space through which the molten composition is extruded, surrounding a central outlet through which blowing air is passed to inflate the extruded material to form a film, radially-extending arms bridging said annular space.

8. A process according to any preceding claim, which comprises applying cooling air to the extruded film to cool it as rapidly as possible to prevent vaporisation of water within the film.

9. A process according to any preceding claim, comprising applying a constant pressure of material at the feed zone.

10. A process according to any preceding claim, wherein the transit time for passage of the material through the apparatus from the feed zone to leaving the die is less than 7 minutes.

11. A process according to Claim 10, wherein the transit time is less than 5 minutes.

## Patentansprüche

1. Verfahren zum Extrudieren einer plastifizierten PVA-Zusammensetzung, umfassend ein Aufheizen einer Extrusionsvorrichtung auf Betriebstemperatur, die einen Einlauftrichter aufweist, welcher einen Zuführbereich an einem Ende der Vorrichtung versorgt, sowie einen Fließkanal zwischen diesen, Leiten eines thermoplastischen Materials durch den Fließkanal der Extrusionsvorrichtung, bis das Material das Innere der Vorrichtung von dem Einlauftrichter bis zu einem Düsenkopf im Wesentlichen ausfüllt, und anschließend ein Zuführen der PVA-Zusammensetzung in die Vorrichtung mit im Wesentlichen keiner Diskontinuität zwischen dem thermoplastischen Material und der PVA-Zusammensetzung, **dadurch gekennzeichnet, dass** bei Beendigung des Extrusionsvorgangs eine Charge von hochdichtem Polyethylen durch die Vorrichtung geleitet wird, mit Wesentlichen keiner Diskontinuität zu dem Ende der Zufuhr der PVA-Zusammensetzung, und der Vorrichtung gestattet wird, mit dem in dieser befindlichen hochdichten Polyethylen abzukühlen.

2. Verfahren nach Anspruch 1, bei dem die Vorrichtung einen gekühlten Zuführabschnitt aufweist.

3. Verfahren nach Anspruch 2, bei dem die Vorrichtung ein Verdichtungsverhältnis zwischen 2,0 : 1 und 3,5 : 1 aufweist.

4. Verfahren nach Anspruch 3, bei dem die Vorrichtung ein Verdichtungsverhältnis von 2,5 : 1 aufweist.

5. Verfahren nach einem der vorgenannten Ansprüche, bei dem die Vorrichtung ein Längen zu Durchmesserverhältnis von 25 : 1 bis 30 : 1 aufweist.

6. Verfahren nach einem der vorgenannten Ansprüche, umfassend ein Regeln der Temperaturen in der Verrichtung, so dass die Temperatur von einer Temperatur im Zuführbereich von 90° C bis 130°C fortlaufend auf eine Temperatur am Düsenkopfende der Vorrichtung von 160°C bis 205°C ansteigt.

7. Verfahren nach einem der vorgenannten Ansprüche, umfassend die Verwendung eines Düsenkopfs, der einen ringförmigen Raum umfasst, durch den die geschmolzene Zusammensetzung extrudiert wird, der einen zentralen Auslass umgibt, durch den Druckluft geleitet wird, um das extrudierte Material aufzublasen, um eine Folie zu bilden, wobei radial verlaufende Arme den ringförmigen Raum überbrücken.

8. Verfahren nach einem der vorgenannten Ansprüche, welches ein Aufbringen von Kühlluft auf die extrudierte Folie umfasst, um diese so schnell als möglich zu kühlen, um ein Verdampfen von Wasser innerhalb der Folie zu verhindern

9. Verfahren nach einem der vorgenannten Ansprüche, umfassend ein Aufbringen eines konstanten Materialdrucks an dem Zuführbereich.

10. Verfahren nach einem der vorgenannten Ansprüche, bei dem die Durchlaufzeit für das Durchleiten des Materials durch die Vorrichtung von dem Zuführbereich bis zum Verlassen des Düsenkopfs weniger als 7 Minuten beträgt.

11. Verfahren nach Anspruch 10, bei dem die Durchlaufzeit weniger als 5 Minuten beträgt.

## Revendications

1. Procédé d'extrusion d'une composition de PVA plastifié, comprenant les opérations consistant à chauffer à une température de fonctionnement un appareil d'extrusion ayant une trémie d'entrée alimentant une zone d'alimentation à une extrémité de l'appareil, une filière d'extrusion à l'autre extrémité et un cylindre entre elles, à faire passer une matière thermoplastique à travers le cylindre de l'appareil d'extrusion jusqu'à ce que la matière remplisse sensiblement l'intérieur de l'appareil de la trémie d'entrée à la filière, puis à introduire la composition de PVA dans l'appareil sensiblement sans discontinuité entre la matière thermoplastique et la composition de PVA, **caractérisé par**, lors de l'achèvement du procédé d'extrusion, les opérations consistant à faire passer une charge de polyéthylène haute densité à travers l'appareil sensiblement sans discontinuité par rapport à la fin de l'alimentation de la composition de PVA, et à laisser l'appareil refroidir avec du polyéthylène haute densité à l'intérieur de celui-ci.

2. Procédé selon la revendication 1, dans lequel l'appareil a une section d'alimentation refroidie.

3. Procédé selon la revendication 2, dans lequel l'appareil a un rapport de compression entre 2,0:1 et 3,5:1.

4. Procédé selon la revendication 3, dans lequel l'appareil a un rapport de compression de 2,5:1.

5. Procédé selon l'une quelconque des revendications précédentes, dans lequel l'appareil a un rapport longueur à diamètre de 25:1 à 30:1.

6. Procédé selon l'une quelconque des revendications précédentes, comprenant l'opération consistant à contrôler les températures dans l'appareil pour augmenter à partir d'une température dans la zone d'alimentation de 90°C à 130°C progressivement jusqu'à une température à l'extrémité filière de l'appareil de 160°C à 205°C.

7. Procédé selon l'une quelconque des revendications précédentes, comprenant l'utilisation d'une filière qui comprend un espace annulaire à travers lequel la composition fondue est extrudée, entourant une sortie centrale à travers laquelle de l'air d'insufflation est amené à passer pour gonfler la matière extrudée afin de former un film, des bras s'étendant radialement pontant ledit espace annulaire.

8. Procédé selon l'une quelconque des revendications précédentes, qui comprend l'application d'air de refroidissement au film extrudé pour le refroidir aussi rapidement que possible pour empêcher une vaporisation d'eau à l'intérieur du film.

9. Procédé selon l'une quelconque des revendications précédentes, comprenant l'application d'une pression constante de matière au niveau de la zone d'alimentation.

10. Procédé selon l'une quelconque des revendications précédentes, dans lequel le temps de transit pour un passage de la matière à travers l'appareil à partir de la zone d'alimentation à la sortie de la filière est de moins de 7 minutes.

11. Procédé selon la revendication 10, dans lequel le temps de transit est de moins de 5 minutes.
